# EUROPEAN PATENT APPLICATION

(11) **EP 4 016 719 A2**
(43) Date of publication of application: **22.06.2022**
(21) Application number: 21206491.9
(22) Date of filing: 04.11.2021
(51) Int. Cl.: H01M 50/24, H01M 50/244, H01M 50/249, H01M 50/262

(54) **ASSEMBLY STRUCTURE OF BATTERY CASE FOR ELECTRIC VEHICLE**

(30) Priority: 18.12.2020 KR 20200178069
(71) Applicant: Sungwoo Hitech Co., Ltd., Jeonggwan-myeon, Gijang-gun Busan 46020 (KR)
(72) Inventor: PARK, Sungyong, 46020 Busan (KR); SOHN, Sung Man, 50553 Gyeongsangnam-do (KR)
(74) Representative: Maikowski & Ninnemann Patentanwälte Partnerschaft mbB

(57) **Abstract**

An assemble structure of a battery case for an electric vehicle is disclosed. The assemble structure of the battery case may include: a lower case configured to include a bottom plate and a wall provided at an edge of the bottom plate, to form an accommodating space with an upper end that is opened through the wall; a plurality of first fastening members fixed to the wall of the lower case along an edge direction; a gasket configured to have a gasket hole into which the first fastening members are fitted, to be elastically and compressively deformable through an upper surface of the wall; a cover configured to have a flange portion for pressing the gasket that is formed at an edge thereof; second fastening members coupled to a coupling hole formed in the flange portion of the cover and fastened to the first fastening members; and a stopper head portion integrally provided with the first fastening members, to limit a compressive deformation amount of the gasket and to fix a position of the gasket.

## Description

### CROSS-REFERENCE TO RELATED APPLICATION

This application claims priority to and benefits of Korean Patent Application No. 10-2020-0178069, filed in the Korean Intellectual Property Office on December 18, 2020, the entire contents of which are incorporated herein by reference.

### BACKGROUND OF THE INVENTION

### (a) Field of the Invention

An embodiment of the present invention relates to a high voltage battery pack for an electric vehicle, more particularly, to a battery case assembly structure of a high capacity battery pack mounted in a vehicle body of an electric vehicle.

### (b) Description of the Related Art

Recently, electric vehicles have been steadily developed due to environmental pollution issues and efforts to develop alternative energy.

An electric vehicle is equipped with an electric motor (drive motor) for driving the vehicle, and a high voltage battery pack for supplying electric power to the electric motor. The high voltage battery pack is an energy source that drives an electric motor, and supplies high voltage power to the electric motor through an inverter.

The battery pack is typically mounted in a lower portion of a vehicle body. The battery pack includes a case having an inner space, a battery module installed in the inner space of the case, and a cover covering the case.

In such a battery pack, the case and the cover are in close contact with each other through flange portions thereof, and the flange portions that are in close contact with each other are fastened by fastening means such as bolts and nuts. However, it may be difficult to ensure watertightness of the battery case assembly due to a gap or flatness error between edge portions of the case and the cover.

In order to ameliorate such a problem, recently, a gasket has been mounted between the flange portions of the case and the cover. The gasket is compressed by a fastening force of the fastening means to seal the gap between the case and the cover.

In an assembly structure of a battery case using a gasket, a bush for preventing the gasket from being compressed beyond a set range and a guide protrusion for fixing a position of the gasket with respect to the case are provided on the gasket.

Since the gasket is provided with the bush and the guide protrusion, a structure of the gasket and the assembly structure of the case and the cover through the gasket are complicated, which may cause an increase in manufacturing cost.

The above information disclosed in this Background section is only for enhancement of understanding of the background of the invention, and therefore, it may contain information that does not form the prior art that is already known in this country to a person of ordinary skill in the art.

### SUMMARY OF THE INVENTION

An embodiment of the present invention has been made in an effort to provide an assembly structure of a battery case for an electric vehicle, capable of improving watertight performance with a simple configuration as an assembly structure of a battery case for accommodating battery modules.

An embodiment of the present invention provides an assembly structure of a battery case for an electric vehicle, including: a lower case configured to include a bottom plate and a wall provided at an edge of the bottom plate, to form an accommodating space with an upper end that is opened through the wall; a plurality of first fastening members fixed to the wall of the lower case along an edge direction; a gasket configured to have a gasket hole into which the first fastening members are fitted, to be elastically and compressively deformable through an upper surface of the wall; a cover configured to have a flange portion for pressing the gasket that is formed at an edge thereof; second fastening members coupled to a coupling hole formed in the flange portion of the cover and fastened to the first fastening members; and a stopper head portion integrally provided with the first fastening members, to limit a compressive deformation amount of the gasket and to fix a position of the gasket.

The gasket may include: at least one first gasket protrusion configured to support the upper surface of the wall; at least one second gasket protrusion configured to support a lower surface of the flange portion of the cover; and a third gasket protrusion configured to support the stopper head portion on an inner circumferential surface of the gasket hole.

The wall may form an inner space, and may form a mounting hole in which the first fastening members are mountable.

The first fastening member may include a nut portion that is fixed to a mounting hole formed in the wall.

According to one aspect, the stopper head portion may include: a head body integrally formed with the nut portion to a predetermined height, to support the upper surface of the wall, and to limit the compressive deformation amount of the gasket; and a stopping groove formed on an outer circumferential surface of the head body along an outer circumferential direction to support a gasket protrusion provided on an inner circumferential surface of the gasket hole.

The heat body may include: a cover support surface configured to support a lower surface of the flange portion of the cover; and a wall support surface configured to support an upper surface of an edge of a mounting hole of the wall.

The head body may include an upper rib and a lower rib respectively provided at upper and lower sides thereof with the stopping groove therebetween.

According to another aspect, the stopper head portion may include: a head body integrally formed with the nut portion to a predetermined height, to support the upper surface of the wall, and to limit the compressive deformation amount of the gasket; and a stopping groove formed on an outer circumferential surface of the head body along an outer circumferential direction to support the gasket protrusion provided on an inner circumferential surface of the gasket hole.

The heat body may include: a cover support surface configured to support a lower surface of the flange portion of the cover; and a wall support surface configured to support an upper surface of an edge of a mounting hole of the wall.

The head body may include a large-diameter surface formed at an upper side thereof, and a small-diameter surface formed at a lower side to have a smaller diameter than the large-diameter surface with the stopping step therebetween.

The second fastening member may include a bolt.

Another embodiment of the present invention provides an assembly structure of a battery case for an electric vehicle, including: a lower case configured to include a bottom plate and a wall provided at an edge of the bottom plate, to form an accommodating space with an upper end that is opened through the wall; a plurality of first fastening members configured to integrally form a head body supporting an upper surface of the wall to be fixed to the wall along an edge direction; a gasket configured to have a gasket hole into which the first fastening members are fitted, to be elastically and compressively deformable through an upper surface of the wall; a gasket stopper formed on an outer circumferential surface of the head body to support a gasket protrusion provided on an inner circumferential surface of the gasket hole; a cover configured to support an upper surface of the head body to form a flange portion at an edge portion thereof for pressing the gasket; and second fastening members coupled to a coupling hole provided in the flange portion of the cover and fastened to the first fastening members.

According to one aspect, the gasket stopper may include a stopping groove formed on an outer circumferential surface of the head body along an outer circumferential direction.

According to another aspect, the gasket stopper may include a stopping step formed on an outer circumferential surface of the head body along an outer circumferential direction.

According to embodiments of the present invention, the sealing performance of the lower case and the cover may be improved by limiting the compressive deformation amount of the gasket through the head body and the gasket stopper of the stopper head portion and fixing the gasket while guiding the compression deformation of the gasket.

Further, effects that can be obtained or expected from embodiments of the present invention are directly or suggestively described in the following detailed description. That is, various effects expected from embodiments of the present invention will be described in the following detailed description.

### BRIEF DESCRIPTION OF THE DRAWINGS

The drawings are intended to be used as references for describing the embodiments of the present invention, and the accompanying drawings should not be construed as limiting the technical spirit of the present invention.
FIG. 1 illustrates an exploded perspective view showing an assembly structure of a battery case for an electric vehicle according to an embodiment of the present invention.
FIG. 2 illustrates a partially enlarged perspective view of FIG. 1, showing an assembly structure of a battery case for an electric vehicle according to an embodiment of the present invention.
FIG. 3 illustrates a schematic cross-sectional diagram showing a state before assembling of a battery case assembly structure for an electric vehicle according to an embodiment of the present invention.
FIG. 4 illustrates a stopper head portion applied to an assembly structure of a battery case for an electric vehicle according to an embodiment of the present invention.
FIG. 5 illustrates a view for describing an action of a battery case assembly structure for an electric vehicle according to an embodiment of the present invention.
FIG. 6 illustrates an exploded perspective view showing an assembly structure of a battery case for an electric vehicle according to another embodiment of the present invention.
FIG. 7 illustrates a schematic cross-sectional diagram showing a state before assembling of a battery case assembly structure for an electric vehicle according to another embodiment of the present invention.
FIG. 8 illustrates a stopper head portion applied to an assembly structure of a battery case for an electric vehicle according to another embodiment of the present invention.
FIG. 9 illustrates a view for describing an action of a battery case assembly structure for an electric vehicle according to another embodiment of the present invention.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

In order to clearly describe the present invention, parts that are irrelevant to the description are omitted, and identical or similar constituent elements throughout the specification are denoted by the same reference numerals.

Since the size and thickness of each configuration shown in the drawings are arbitrarily shown for convenience of description, the present invention is not necessarily limited to configurations illustrated in the drawings, and in order to clearly illustrate several parts and areas, enlarged thicknesses are shown.

In the following description, dividing names of components into first, second, and the like is to divide the names because the names of the components are the same, and an order thereof is not particularly limited.

In the present specification, unless explicitly described to the contrary, the word "comprise" and variations such as "comprises" or "comprising" will be understood to imply the inclusion of stated elements but not the exclusion of any other elements.

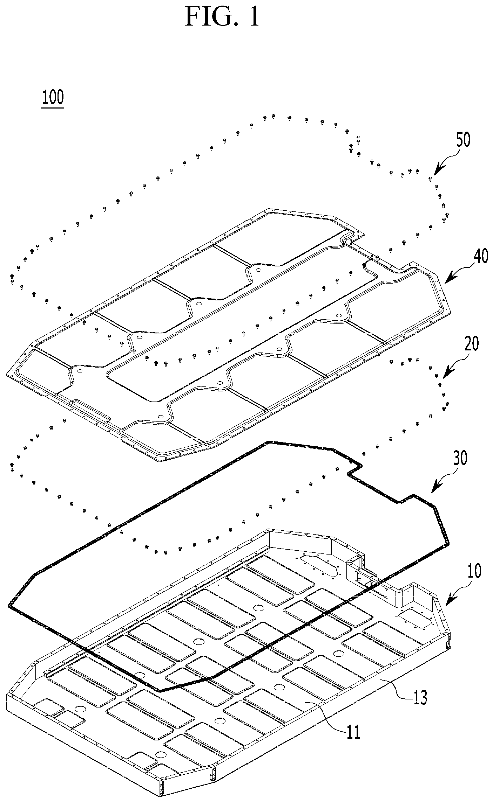

FIG. 1 illustrates an exploded perspective view showing an assembly structure of a battery case for an electric vehicle according to an embodiment of the present invention.

Referring to FIG. 1, an assembly structure 100 of a battery case for an electric vehicle according to an embodiment of the present invention is mounted in an underbody of the electric vehicle, and may be applied to a battery pack that applies high voltage power to a driving motor.

Herein, the battery pack accommodates a plurality of battery modules therein, each of which is an aggregation of battery cells capable of charging and/or discharging, and includes a battery management system (BMS) that senses a voltage, a current, and a temperature of the battery modules and performs operation control.

However, it should not be understood that a protection scope of the present invention is limitedly applied to a battery pack employed in an electric vehicle, and a technical idea of the present invention may be applied to any battery pack employed in various mobile devices and fully automatic devices.

Hereinafter, in the drawing, a portion close to an upper side is defined as an upper portion, an upper end, an upper surface, and an upper end portion, and a portion close to a lower side is defined as a lower portion, a lower end, a lower surface, and a lower end portion.

Furthermore, in the following, an end (one/first side or the other/second side) may be defined as either end, and may be defined as a certain portion (one/first side portion or the other/second side portion) including the end.

The assembly structure 100 of the battery case for an electric vehicle according to the embodiment of the present invention is an assembly structure of a battery case accommodating battery modules, and has a structure capable of improving watertight performance with a simple configuration.

To this end, the assemble structure 100 of the battery case for an electric vehicle according to the embodiment of the present invention includes a lower case 10, first fastening members 20, a gasket 30, a cover 40, second fastening members 50, and a stopper head portion 60.

In the embodiment of the present invention, the lower case 10 is a battery case for accommodating battery modules, and is mounted in an underbody of a vehicle body. The lower case 10 may be formed to include one panel or two or more panels connected to each other.

The lower case 10 may include accessory elements such as brackets, rods, plates, blocks, and collars for supporting various components to be described below. However, since the accessory elements are for installing each of the components to be described below in the lower case 10, in the embodiment of the present invention, the accessory elements are collectively referred to as the lower case 10, except in exceptional cases.

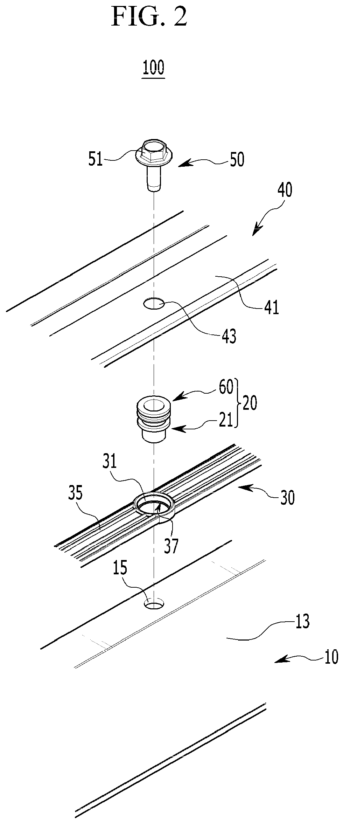

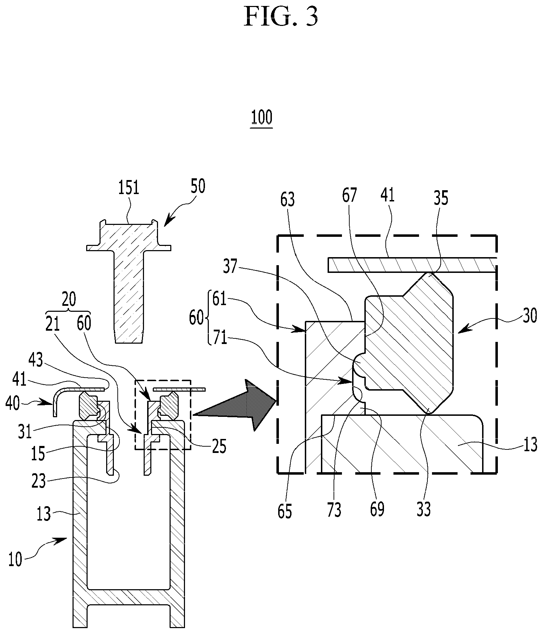

FIG. 2 illustrates a partially enlarged perspective view of FIG. 1, showing an assembly structure of a battery case for an electric vehicle according to an embodiment of the present invention, and FIG. 3 illustrates a schematic cross-sectional diagram showing a state before assembling of a battery case assembly structure for an electric vehicle according to an embodiment of the present invention.

Referring to FIG. 1 to FIG. 3, the lower case 10 according to an embodiment of the present invention includes a bottom plate 11 and a wall 13. The bottom plate 11 includes support means for supporting the battery modules. Since the support means are well known to those skilled in the art, a further description will be omitted. The wall 13 is provided at an edge portion of the bottom plate 11.

Accordingly, the lower case 10 forms an accommodation space in which an upper end is opened and a lower end is closed by the bottom plate 11 and the wall 13. Further, the wall 13 may be formed to include an outer wall and an inner wall coupled to each other. The wall 13 may form an inner space and an upper surface through coupling of the outer wall and the inner wall.

Herein, mounting holes 15 in which the first fastening members 20 may be mounted are formed in the wall 13. The mounting holes 15 are formed to be spaced apart from each other at a predetermined interval along an edge direction on the upper surface of the wall 13.

In the embodiment of the present invention, the first fastening members 20 are fixed along the edge direction to the wall 13 of the lower case 10, and are mounted in the mounting holes 15.

The first fastening members 20 are provided in a nut type, for example. The first fastening members 20 each include a nut portion 21 fixed to the corresponding mounting hole 15 of the wall 13. A fastening hole 23 vertically extending therethrough may be formed in the nut portion 21, and a coupling groove 25 coupled to an edge of the mounting hole 15 may be formed at an outer circumference side.

In the embodiment of the present invention, the gasket 30 is positioned on an upper surface of the wall 13 along the edge direction of the lower case 10. The gasket 30 is provided to be elastically and compressively deformable by a pressing force acting in a vertical direction.

The gasket 30 is formed with gasket holes 31 into which the first fastening members 20 are fitted in the vertical direction. The gasket 30 is formed with a plurality of first gasket protrusions 33 supporting the upper surface of the wall 13 on a lower surface thereof.

In addition, the gasket 30 is formed with a plurality of second gasket protrusions 35 supporting the lower surface of the cover 40. Further, in the gasket 30, a third gasket protrusion 37 is formed along an inner circumference direction of the gasket hole 31.

In the embodiment of the present invention, the cover 40 covers an upper open end of the lower case 10, and a flange portion 41 for pressing the upper portion of the gasket 30 is formed at an edge portion thereof.

Herein, a lower surface of the flange portion 41 supports the second gasket protrusions 35 of the gasket 30. In addition, coupling holes 43 connected to the coupling holes 23 of the first coupling members 20 are formed in the flange portion 41.

In the embodiment of the present invention, the second fastening members 50 are coupled to the coupling holes 43 of the cover 40, and are fastened to the nut portions 21 of the first fastening members 20 through the fastening holes 23. The second fastening members 50 each include a bolt 51 fastened to the nut portion 21.

The second fastening members 50 may be fastened to the nut portions 21 of the first fastening members 20 with the gasket 30 between the flange portion 41 of the cover 40 and the upper surface of the wall 13 of the lower case 10, to compressively deform the gasket 30. As the gasket 30 is compressively deformed between the flange portion 41 and the wall 13, the gasket 30 may seal between the lower case 10 and the cover 40.

In the embodiment of the present invention, when the first fastening members 20 and the second fastening members 50 are fastened, the stopper head portion 60 is to limit a compressive deformation amount of the gasket 30 that is compressively deformed between the flange portion 41 and the wall 13, to guide the compressive deformation of the gasket 30, and to fix a mounted position of the gasket 30.

That is, the stopper head portion 60 is to prevent the gasket 30 from being crushed due to overcompressive deformation of the gasket 30 and to prevent the gasket 30 from being separated from a predetermined position due to the compression deformation.

Further, the stopper head portion 60 may support an inner circumferential surface of the gasket hole 31 and the third gasket protrusion 37 protruding from the inner circumferential surface. The stopper head portion 60 is integrally provided with the first fastening members 20, and is integrally connected with the nut portions 21 of the first fastening members 20.

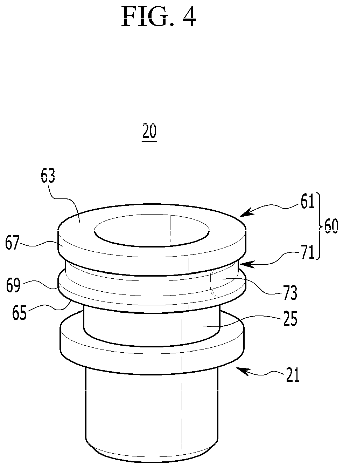

FIG. 4 illustrates a stopper head portion applied to an assembly structure of a battery case for an electric vehicle according to an embodiment of the present invention.

Referring to FIG. 1 to FIG. 4, the stopper head portion 60 according to an embodiment of the present invention includes a head body 61 integrally connected to a nut portion 21 and a gasket stopper 71 provided in the head body 61.

The head body 61 may be positioned at an upper portion of the first fastening member 20, may have an outer circumferential surface, may be formed at a predetermined height, may support the upper surface of the wall 13 of the lower case 10, and may limit the compressive deformation amount of gasket 30.

The head body 61 has a cover support surface 63 for supporting the lower surface of the flange portion 41 of the cover 40, and a wall support surface 65 for supporting the upper surface of the edge of the mounting hole 15 of the wall 13.

The gasket stopper 71 includes a stopping groove 73 formed on the outer circumferential surface of the head body 61 along an outer circumferential direction. The stopping groove 73 is provided as a groove formed on the outer circumferential surface of the head body 61 along the outer circumferential direction. The stopping groove 73 may support the third gasket protrusion 37 in the gasket hole 31, and may set a displacement of the gasket 30 before and after compression.

Herein, the head body 61 includes an upper rib 67 and a lower rib 69 respectively provided on upper and lower sides with the stopping groove 73 interposed therebetween.

The upper rib 67 supports the third gasket protrusion 37 through the stopping groove 73, and supports an upper inner peripheral surface of the gasket hole 31 before the gasket 30 is compressively deformed.

In addition, the lower rib 69 supports the third gasket protrusion 37 through the stopping groove 73, and supports a lower inner peripheral surface of the gasket hole 31 after the gasket 30 is compressively deformed.

Hereinafter, an assembly process and an action of the battery case assembly structure 100 for an electric vehicle according to an embodiment of the present invention will be described in detail with reference to the accompanying drawings.

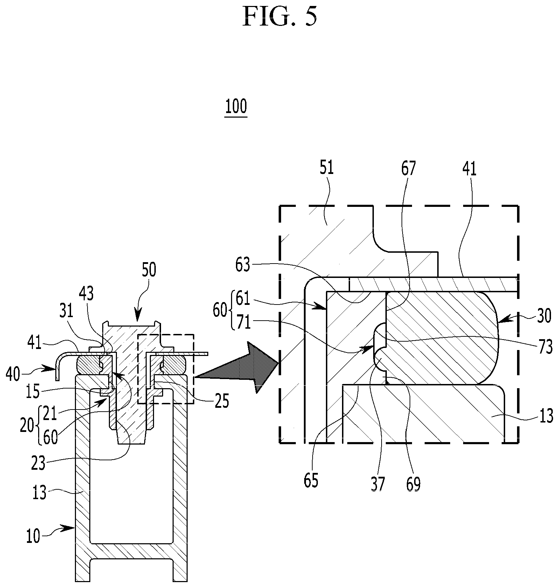

FIG. 5 illustrates a view for describing an action of a battery case assembly structure for an electric vehicle according to an embodiment of the present invention.

According to the embodiment of the present invention, the first fastening members 20 are mounted in the mounting hole 15 of the wall 13 in the lower case 10, and the stopper head portion 60 is integrally formed in the first fastening members 20. In addition, the head body 61 in the stopper head portion 60 is formed at a predetermined height to support the upper surface of the edge of the mounting hole 15 through the wall support surface 65.

In this state, in the embodiment of the present invention, the gasket 30 is positioned on the upper surface of the wall 13, and in this case, the gasket 30 is positioned on the upper surface of the wall 13 while inserting the head body 61 of the stopper head portion 60 into the gasket hole 31.

Herein, the first gasket protrusions 33 of the gasket 30 support the upper surface of the wall 13, and the third gasket protrusion 37 supports the stopping groove 73 of the head body 61.

Further, in the head body 61, the upper rib 67 supports the third gasket protrusion 37 through the stopping groove 73, and supports the upper inner peripheral surface of the gasket hole 31.

Next, in the embodiment of the present invention, the flange portion 41 of the cover 40 is positioned on the gasket 30, and the second gasket protrusion 35 of the gasket 30 supports the lower surface of the flange portion 41. In this case, in the embodiment of the present invention, the coupling hole 43 of the flange portion 41 is aligned with the fastening hole 23 of the nut portion 21 through the head body 61.

In this state, in the embodiment of the present invention, the gasket 30 is positioned between the lower surface of the flange portion 41 and the upper surface of the wall 13, and as illustrated in FIG. 5, the second fastening members 50 as bolts 51 are fastened to the nut portions 21 through the coupling hole 43 of the flange portion 41 and the head body 61.

Accordingly, the gasket 30 is compressively deformed by fastening forces of the first and second fastening members 20 and 50 between the flange portion 41 and the wall 13 to seal between the lower case 10 and the cover 40.

Specifically, in the embodiment of the present invention, a space between the upper surface of the wall 13 and the lower portion of the gasket 30 is sealed through the first gasket protrusions 33, and a space between the lower surface of the flange portion 41 and the upper portion of the gasket 30 is sealed through the second gasket protrusion 35.

Herein, the lower surface of the flange portion 41 supports the cover support surface 63 of the head body 61. In addition, the lower rib 69 of the head body 61 supports the third gasket protrusion 37 through the stopping groove 73, and supports the lower inner peripheral surface of the gasket hole 31. That is, the third gasket protrusion 37 supports the lower rib 69 while sliding in a downward direction by the stopping groove 73.

Accordingly, in the embodiment of the present invention, it is possible to prevent distortion due to overcompressive deformation of the gasket 30, and to improve a sealing property of the gasket 30 by limiting a compressive deformation amount of the gasket 30 through the head body 61 of the stopper head portion 60.

In addition, in the embodiment of the present invention, it is possible to prevent the gasket 30 from being separated, and to ameliorate a leakage problem between the lower case 10 and the cover 40 as the third gasket protrusion 37 of the gasket 30 is fixed to the head body 61 while guiding the compressive deformation of the gasket 30 through the stopping groove 73 of the stopper head portion 60.

Further, in the embodiment of the present invention, it is possible to delete the bush and the guide protrusion as in the conventional art by the stopper head portion 60 of the first fastening member 20. Accordingly, in the embodiment of the present invention, the structure of the gasket 30 and the assembly structure of the lower case 10 and the cover 40 through the gasket 30 may be simplified, and a manufacturing cost may be reduced.

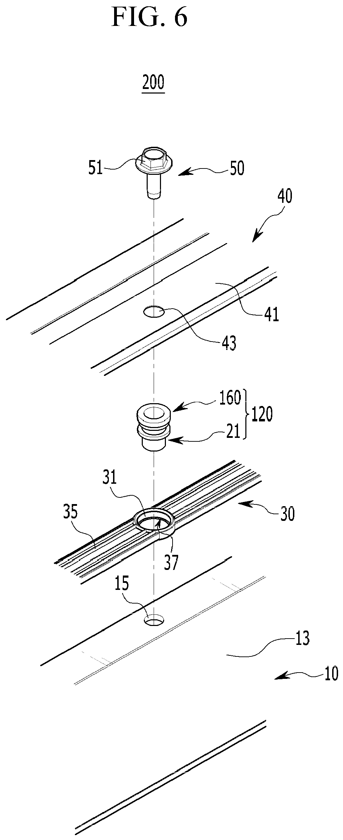

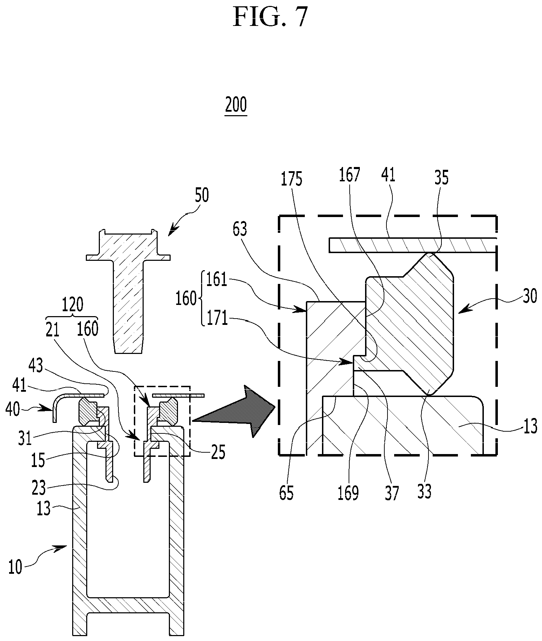

FIG. 6 illustrates an exploded perspective view showing an assembly structure of a battery case for an electric vehicle according to another embodiment of the present invention, and FIG. 7 illustrates a schematic cross-sectional diagram showing a state before assembling of a battery case assembly structure for an electric vehicle according to another embodiment of the present invention. In the drawings, the same reference numerals are assigned to the same components as in the previous embodiment.

Referring to FIG. 6 and FIG. 7, an assembly structure 200 of the battery case for an electric vehicle according to another embodiment of the present invention may constitute a gasket stopper 171 having a stopping step 175 formed in a head body 161, in a stopper head portion 160 of first fastening members 120.

In another embodiment of the present invention, configurations of the lower case 10, the nut portion 21 of the first fastening members 120, the gasket 30 having the first, second, and third gasket protrusions 33, 35, and 37, the cover 40, and the second fastening members 50 are the same as in the previous embodiment, so detailed descriptions will be omitted.

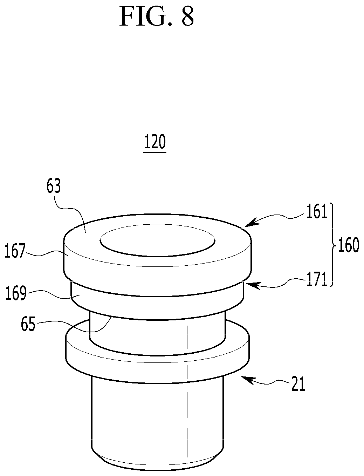

FIG. 8 illustrates a stopper head portion applied to an assembly structure of a battery case for an electric vehicle according to another embodiment of the present invention.

Referring to FIG. 6 to FIG. 8, in the embodiment of the present invention, the head body 161 of the stopper head 160 has a cover support surface 63 for supporting the lower surface of the flange portion 41 of the cover 40, and a wall support surface 65 for supporting an upper surface of an edge of the mounting hole 15 of the wall 13 in the lower case 10.

In the embodiment of the present invention, a stopping step 175 of the gasket stopper 171 is formed along an outer circumferential direction on the outer circumferential surface of the head body 161. The stopping step 175 may form the outer peripheral surface of the head body 161 stepwise in the vertical direction, may support the third gasket protrusion 37 in the gasket hole 31 of the gasket 30, and may set a displacement of the gasket 30 before and after compression.

Further, the head body 161 has a large-diameter surface 167 and a small-diameter surface 169 respectively positioned at an upper side and a lower side with the stopping step 175 therebetween.

The large-diameter surface 167 supports the third gasket protrusion 37 through the stopping step 175, and supports an upper inner peripheral surface of the gasket hole 31 before the gasket 30 is compressively deformed.

In addition, the small-diameter surface 169 is a portion having a smaller outer diameter than that of the large-diameter surface 167, and supports the third gasket protrusion 37 through the stopping step 175, and supports a lower inner peripheral surface of the gasket hole 31 after the gasket 30 is compressively deformed.

Hereinafter, an assembly process of the battery case assembly structure 200 for an electric vehicle according to another embodiment of the present invention will be described in detail with reference to the accompanying drawings.

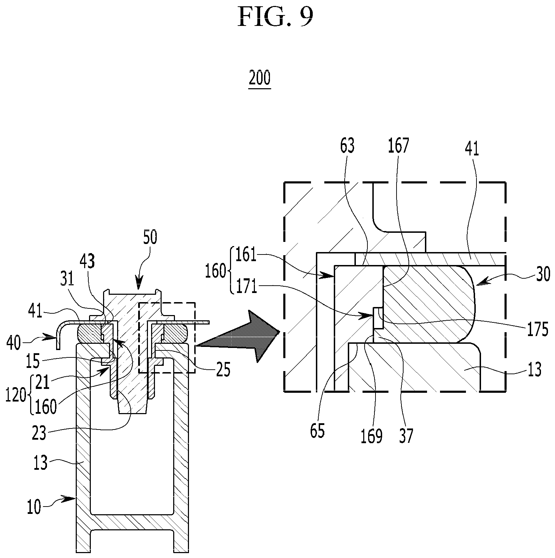

First, according to another embodiment of the present invention, as illustrated in FIG. 9, the second fastening members 50 are fastened to the nut portion 21 through the coupling hole 43 of the flange portion 41 and the head body 161 by placing the gasket 30 having the head body 161 inserted into the gasket hole 31 between the upper surface of the wall 13 of the lower case 10 and the lower surface of the flange portion 41 of the cover 40.

Accordingly, the gasket 30 is compressively deformed by fastening forces of the first and second fastening members 120 and 50 between the flange portion 41 and the wall 13 to seal between the lower case 10 and the cover 40.

Herein, the lower surface of the flange portion 41 supports the cover support surface 63 of the head body 161. In addition, the small-diameter surface 169 of the head body 161 supports the third gasket protrusion 37 through the stopping step 175, and supports the lower inner peripheral surface of the gasket hole 31. That is, the third gasket protrusion 37 supports the small-diameter surface 169 while sliding in a downward direction by the stopping groove 175.

Since remaining configurations and operational effects of the battery case assemble structure 200 for an electric vehicle according to another embodiment of the present invention as described above are the same as in the previous embodiment, detailed descriptions thereof will be omitted.

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

**<Description of Symbols>**

| | | | |
|---|---|---|---|
| 10: | lowercase | 11: | bottom plate |
| 13: | wall | 15: | mounting hole |
| 20, 120: | first fastening member | 21: | nut portion |
| 23: | fastening hole | 25: | coupling groove |
| 30: | gasket | 31: | gasket hole |
| 33: | first gasket protrusion | 35: | second gasket protrusion |
| 37: | third gasket protrusion | 40: | cover |
| 41: | flange portion | 43: | coupling hole |
| 50: | second fastening member | 51: | bolt |
| 60, 160: | stopper head portion | 61, 161: | head body |
| 63: | cover support surface | 65: | wall support surface |
| 67: | upper rib | 69: | lower rib |
| 71, 171: | gasket stopper | 73: | stopping groove |
| 167: | large-diameter surface | 169: | small-diameter surface |
| 175: | stopping step | | |
| 100, 200: | battery case assemble structure | | |

## Claims

1. An assembly structure of a battery case for an electric vehicle, the structure comprising:
a lower case configured to include a bottom plate and a wall provided at an edge of the bottom plate, to form an accommodating space with an upper end that is opened through the wall;
a plurality of first fastening members fixed to the wall of the lower case along an edge direction;
a gasket configured to have a gasket hole into which the first fastening members are fitted, to be elastically and compressively deformable through an upper surface of the wall;
a cover configured to have a flange portion for pressing the gasket that is formed at an edge thereof;
second fastening members coupled to a coupling hole formed in the flange portion of the cover and fastened to the first fastening members; and
a stopper head portion integrally provided with the first fastening members, to limit a compressive deformation amount of the gasket and to fix a position of the gasket.

2. The assembly structure of claim 1, wherein
the gasket includes:
at least one first gasket protrusion configured to support the upper surface of the wall;
at least one second gasket protrusion configured to support a lower surface of the flange portion of the cover; and
a third gasket protrusion configured to support the stopper head portion on an inner circumferential surface of the gasket hole.

3. The assembly structure of claim 1, wherein
the wall forms an inner space and forms a mounting hole in which the first fastening members are mountable.

4. The assembly structure of claim 1, wherein
the first fastening member includes a nut portion that is fixed to a mounting hole formed in the wall.

5. The assembly structure of claim 4, wherein
the stopper head portion includes:
a head body integrally formed with the nut portion to a predetermined height, to support the upper surface of the wall, and to limit the compressive deformation amount of the gasket; and
a stopping groove formed on an outer circumferential surface of the head body along an outer circumferential direction to support a gasket protrusion provided on an inner circumferential surface of the gasket hole.

6. The assembly structure of claim 5, wherein
the heat body includes:
a cover support surface configured to support a lower surface of the flange portion of the cover; and
a wall support surface configured to support an upper surface of an edge of a mounting hole of the wall.

7. The assembly structure of claim 5, wherein
the head body includes an upper rib and a lower rib respectively provided at upper and lower sides thereof with the stopping groove therebetween.

8. The assembly structure of claim 4, wherein
the stopper head portion includes:
a head body integrally formed with the nut portion to a predetermined height, to support the upper surface of the wall, and to limit the compressive deformation amount of the gasket; and
a stopping groove formed on an outer circumferential surface of the head body along an outer circumferential direction to support the gasket protrusion provided on an inner circumferential surface of the gasket hole.

9. The assembly structure of claim 8, wherein
the heat body includes:
a cover support surface configured to support a lower surface of the flange portion of the cover; and
a wall support surface configured to support an upper surface of an edge of a mounting hole of the wall.

10. The assembly structure of claim 8, wherein
the head body includes a large-diameter surface formed at an upper side thereof, and a small-diameter surface formed at a lower side to have a smaller diameter than the large-diameter surface with the stopping step therebetween.

11. The assembly structure of claim 1, wherein
the second fastening member includes a bolt.

12. An assembly structure of a battery case for an electric vehicle, the structure comprising:
a lower case configured to include a bottom plate and a wall provided at an edge of the bottom plate, to form an accommodating space with an upper end that is opened through the wall;
a plurality of first fastening members configured to integrally form a head body supporting an upper surface of the wall to be fixed to the wall along an edge direction;
a gasket configured to have a gasket hole into which the first fastening members are fitted, to be elastically and compressively deformable through an upper surface of the wall;
a gasket stopper formed on an outer circumferential surface of the head body to support a gasket protrusion provided on an inner circumferential surface of the gasket hole;
a cover configured to support an upper surface of the head body to form a flange portion at an edge portion thereof for pressing the gasket; and
second fastening members coupled to a coupling hole provided in the flange portion of the cover and fastened to the first fastening members.

13. The assembly structure of claim 12, wherein
the gasket stopper includes a stopping groove formed on an outer circumferential surface of the head body along an outer circumferential direction.

14. The assembly structure of claim 12, wherein
the gasket stopper includes a stopping step formed on an outer circumferential surface of the head body along an outer circumferential direction.
